# EUROPEAN PATENT APPLICATION

(11) **EP 4 557 495 A1**
(43) Date of publication of application: **21.05.2025**
(21) Application number: 24771039.5
(22) Date of filing: 09.01.2024
(51) Int. Cl.: H01M 50/533, H01M 50/566, H01M 50/211

(54) **BATTERY CELL WITH EXCELLENT IMPACT RESISTANCE, AND MANUFACTURING METHOD THEREFOR**

(30) Priority: 13.03.2023 KR 20230032267
(71) Applicant: LG Energy Solution, Ltd., Seoul 07335 (KR)
(72) Inventor: BAEK, Doo Hyun, Daejeon 34122 (KR); BAEK, Sang Min, Daejeon 34122 (KR); KANG, In Woo, Daejeon 34122 (KR)
(74) Representative: Plasseraud IP
(86) International application number: PCT/KR2024/000431
(87) International publication number: WO 2024/191037

(57) **Abstract**

IMPACT-RESISTANT BATTERY CELL AND METHOD OF MANUFACTURING THE SAME

Disclosed are an impact-resistant battery cell and a method of manufacturing the same, and more particularly an impact-resistant battery cell including a case having a receiving space, an electrode assembly received in the case, the electrode assembly including a negative electrode having a negative electrode tab, a positive electrode having a positive electrode tab, and a separator interposed between the negative electrode and the positive electrode, and a pair of electrode leads having a negative electrode lead electrically connected to the negative electrode tab and a positive electrode lead electrically connected to the positive electrode tab, wherein at least one of the negative electrode tab and the positive electrode tab is provided with a plurality of holes spaced apart from each other by a predetermined distance in a longitudinal direction, thereby preventing complete breakage of the electrode tab even if a crack occurs in the electrode tab, and a method of manufacturing the same.

## Description

### [Technical Field]

This application claims the benefit of priority to Korean Patent Application No. 2023-0032267 filed on March 13, 2023, the disclosure of which is incorporated herein by reference in its entirety.

The present invention relates to an impact-resistant battery cell and a method of manufacturing the same, and more particularly to an impact-resistant battery cell capable of preventing complete breakage of an electrode tab even though a crack occurs in the electrode tab and a method of manufacturing the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a case of a pouch-shaped battery cell is made of a flexible material such as a laminate sheet, and therefore the case of the pouch-shaped battery cell may be more easily deformed than a cylindrical case made of metal or a prismatic case made of metal. In other words, when external force is applied to the pouch-shaped battery cell, the case is vulnerable to deformation, such as bending, which may cause an electrode tab to be cut or the electrode tab and an electrode lead to separate may be separated from each other at the junction between.

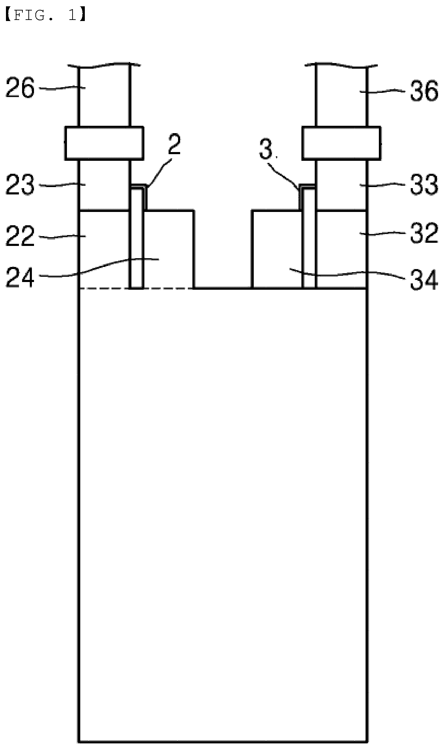

In this regard, the prior art document discloses electrode stack with multiple tabs. As shown in FIG. 1, which is a plan view of a conventional electrode assembly, a first tab 22 of first multiple tabs 22 and 24 is connected to a first lead tab 26, and a first tab 32 of second multiple tabs 32 and 34 is connected to a second lead tab 36. A second tab 24 of the first multiple tabs 22 and 24 and the first lead tab 26 are electrically connected to each other via a first electrode line 2, and a second tab 34 of the second multiple tabs 32 and 34 and the second lead tab 36 are electrically connected to each other via a second electrode line 3.

Although the electrode tabs are constituted by the multiple tabs in order to disperse stress caused by external force to some extent, the first electrode line 2 and the second electrode line 3 are required in order to connect the second tab 24 to the first lead tab 26 and to connect the second tab 34 to the second lead tab 36, respectively, and the first electrode line 2 and the second electrode line 3 are prone to breakage.

In addition, processes of connecting the first electrode line 2 and the second electrode line 3 must be performed, which causes new problems that the manufacturing time is increased and it is necessary to inspect whether the electrode lines and the lead tabs have been properly connected to each other.

### (Prior Art Document)

(Patent Document 1) Korean Patent Application Publication No. 2017-0032031 (published on March 22, 2017)

### [Disclosure]

### [Technical Problem]

The present invention has been made in view of the above problems, and it is an object of the present invention to provide an impact-resistant battery cell capable of inhibiting complete breakage of an electrode tab even though a crack occurs in the electrode tab due to external force and a method of manufacturing the same.

### [Technical Solution]

A battery cell according to the present invention to accomplish the above object includes a case (100) having a receiving space, an electrode assembly (200) received in the case (100), the electrode assembly including a negative electrode (210) having a negative electrode tab (211), a positive electrode (220) having a positive electrode tab (221), and a separator (230) interposed between the negative electrode (210) and the positive electrode (220), and a pair of electrode leads (300) having a negative electrode lead (310) electrically connected to the negative electrode tab (211) and a positive electrode lead (320) electrically connected to the positive electrode tab (221), wherein at least one of the negative electrode tab (211) and the positive electrode tab (221) is provided with a plurality of holes spaced apart from each other by a predetermined distance in a longitudinal direction.

Also, in the battery cell according to the present invention, each of the holes of the plurality of holes may be polygonal, oval, or circular in shape.

Also, in the battery cell according to the present invention, an imaginary line that interconnects the plurality of holes may have at least one of a straight shape, a mountain shape, a wavy shape, and a curved shape.

Also, in the battery cell according to the present invention, the plurality of holes may be formed in the negative electrode tab (211), the plurality of holes may include a plurality of 1a holes (211a) spaced apart from each other by a predetermined distance in the longitudinal direction and a plurality of 1b holes (211b) spaced apart from each other by a predetermined distance in the longitudinal direction, and the 1a holes (211a) and the 1b holes (211b) may be formed so as to be spaced apart from each other by a predetermined distance in a lateral direction.

Also, in the battery cell according to the present invention, in the lateral direction of the negative electrode tab (211), the 1a holes (211a) may partially overlap the 1b holes (211b) or may not completely overlap the 1b holes (211b).

Also, in the battery cell according to the present invention, the plurality of holes may be formed in the positive electrode tab (221), the plurality of holes may include a plurality of 2a holes (221a) spaced apart from each other by a predetermined distance in the longitudinal direction and a plurality of 2b holes (221b) spaced apart from each other by a predetermined distance in the longitudinal direction, and the 2a holes (221a) and the 2b holes (221b) may be formed so as to be spaced apart from each other by a predetermined distance in a lateral direction.

Also, in the battery cell according to the present invention, in the lateral direction of the positive electrode tab (221), the 2a holes (221a) may partially overlap the 2b holes (221b) or may not completely overlap the 2b holes (221b).

Also, in the battery cell according to the present invention, the plurality of holes may be formed in the negative electrode tab (211), the plurality of holes may include a plurality of 1a holes (211a) spaced apart from each other by a predetermined distance in the longitudinal direction, a plurality of 1b holes (211b) spaced apart from each other by a predetermined distance in the longitudinal direction, and a plurality of 1c holes (211c) spaced apart from each other by a predetermined distance in the longitudinal direction, and the 1a holes (211a), the 1b holes (211b), and the 1c holes (211c) may be sequentially formed so as to be spaced apart from each other by a predetermined distance in the lateral direction.

Also, in the battery cell according to the present invention, in the lateral direction of the negative electrode tab (211), the 1b holes (211b), which are located in a middle of the negative electrode tab, may partially overlap the 1a holes (211a) and the 1c holes (211c), which are located at opposite sides of the negative electrode tab, or may not completely overlap the 1a holes and the 1c holes.

Also, in the battery cell according to the present invention, the plurality of holes may be formed in the positive electrode tab (221), the plurality of holes may include a plurality of 2a holes (221a) spaced apart from each other by a predetermined distance in the longitudinal direction, a plurality of 2b holes (221b) spaced apart from each other by a predetermined distance in the longitudinal direction, and a plurality of 2c holes (221c) spaced apart from each other by a predetermined distance in the longitudinal direction, and the 2a holes (221a), the 2b holes (221b), and the 2c holes (221c) may be sequentially formed so as to be spaced apart from each other by a predetermined distance in the lateral direction.

Also, in the battery cell according to the present invention, in the lateral direction of the positive electrode tab (221), the 2b holes (221b), which are located in a middle of the positive electrode tab, may partially overlap the 2a holes (221a) and the 2c holes (221c), which are located at opposite sides of the positive electrode tab, or may not completely overlap the 2a holes and the 2c holes.

In addition, the present invention provides a battery module including the battery cell.

In addition, a battery cell manufacturing method according to the present invention includes a first step of preparing an electrode assembly configured such that a negative electrode having a negative electrode tab, a separator, and a positive electrode having a positive electrode tab are stacked in that order, a second step of connecting a negative electrode lead and a positive electrode lead to the negative electrode tab and the positive electrode tab, respectively, a third step of receiving the electrode assembly having the electrode leads joined thereto in a case having a receiving space, and a fourth step of sealing an edge of the case, wherein the battery cell manufacturing method further includes forming a plurality of holes spaced apart from each other by a predetermined distance in a longitudinal direction in at least one of the negative electrode tab or the positive electrode tab before the second step.

Also, in the battery cell manufacturing method according to the present invention, the plurality of holes is formed in the negative electrode tab (211), the plurality of holes may include a plurality of 1a holes (211a) spaced apart from each other by a predetermined distance in the longitudinal direction and a plurality of 1b holes (211b) spaced apart from each other by a predetermined distance in the longitudinal direction, the 1a holes (211a) and the 1b holes (211b) are spaced apart from each other by a predetermined distance in a lateral direction, and in the lateral direction of the negative electrode tab (211), the 1a holes (211a) may partially overlap the 1b holes (211b) or may not completely overlap the 1b holes.

Also, in the battery cell manufacturing method according to the present invention, the plurality of holes may be formed in the negative electrode tab (211), the plurality of holes may include a plurality of 1a holes (211a) spaced apart from each other by a predetermined distance in the longitudinal direction, a plurality of 1b holes (211b) spaced apart from each other by a predetermined distance in the longitudinal direction, and a plurality of 1c holes (211c) spaced apart from each other by a predetermined distance in the longitudinal direction, the 1a holes (211a), the 1b holes (211b), and the 1c holes (211c) may be sequentially formed so as to be spaced apart from each other by a predetermined distance in the lateral direction, and in the lateral direction of the negative electrode tab (211), the 1b holes (211b), which are located in a middle of the negative electrode tab, may partially overlap the 1a holes (211a) and the 1c holes (211c), which are located at opposite sides of the negative electrode tab, or may not completely overlap the 1a holes (211a) and the 1c holes (211c).

### [Advantageous Effects]

As is apparent from the above description, an impact-resistant battery cell according to the present invention and a method of manufacturing the same have the merit that a plurality of holes spaced apart from each other by a predetermined distance is formed in an electrode tab in a longitudinal direction thereof, whereby propagation of a crack is terminated by the holes even though the crack occurs, and therefore it is possible to prevent breakage of the battery cell.

In addition, the impact-resistant battery cell according to the present invention and the method of manufacturing the same have the advantage that a plurality of holes spaced apart from each other by a predetermined distance is formed in the electrode tab in not only the longitudinal direction thereof but also a lateral direction thereof, whereby propagation of a crack is terminated by the holes irrespective of the direction of progress of the crack, and therefore it is possible to prevent breakage of the battery cell.

### [Description of Drawings]

FIG. 1 is a plan view of a conventional electrode assembly.
FIG. 2 is an exploded perspective view of a battery cell according to a first preferred embodiment of the present invention.
FIG. 3 is a plan view showing the state in which an electrode lead is connected to the electrode assembly shown in FIG. 2.
FIG. 4 is a sectional view taken along line A-A of FIG. 3.
FIG. 5 is a view showing the shape of a hole formed in an electrode tab according to a first preferred embodiment of the present invention.
FIG. 6 is a view showing arrangement of holes formed in the electrode tab according to the first preferred embodiment of the present invention.
FIG. 7 is a plan view showing the state in which an electrode lead is connected to an electrode assembly according to a second preferred embodiment of the present invention.
FIG. 8 is a plan view showing the state in which an electrode lead is connected to an electrode assembly according to a third preferred embodiment of the present invention.
FIG. 9 is a flowchart illustrating a method of manufacturing a battery cell according to a second preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an impact-resistant battery cell according to the present invention and a method of manufacturing the same will be described with reference to the accompanying drawings.

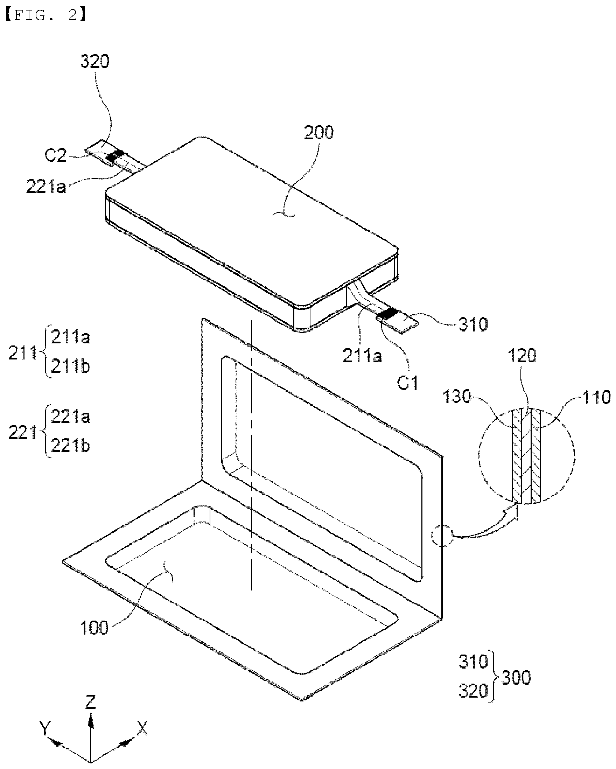

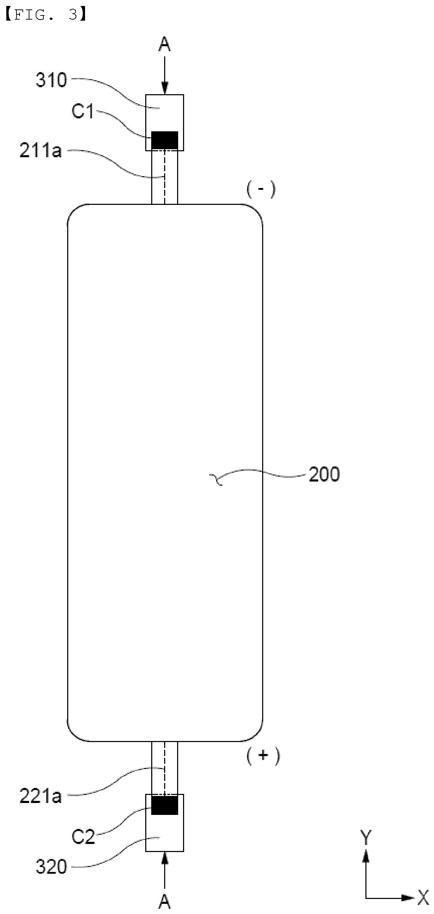

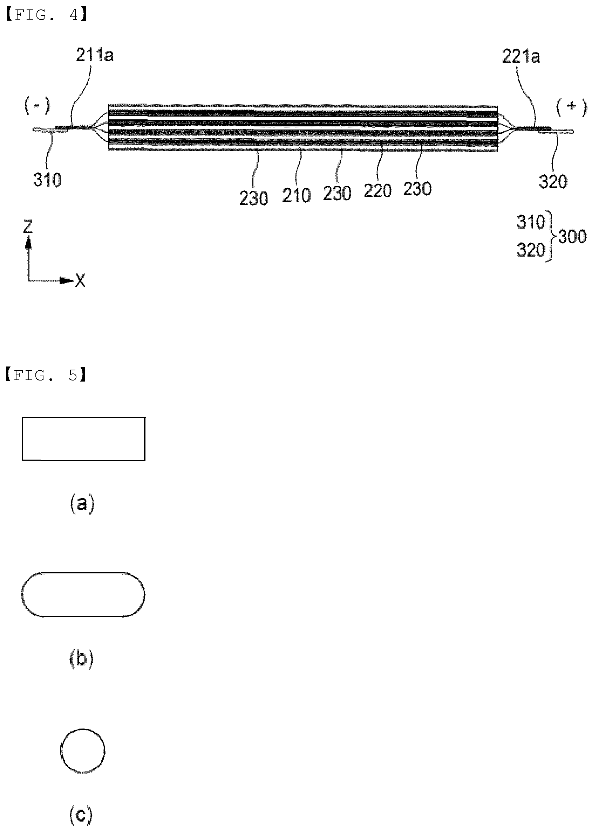

FIG. 2 is an exploded perspective view of a battery cell according to a first preferred embodiment of the present invention, FIG. 3 is a plan view showing the state in which an electrode lead is connected to the electrode assembly shown in FIG. 2, and FIG. 4 is a sectional view taken along line A-A of FIG. 3.

As shown in FIGs. 2 to 4, the battery cell according to the present invention includes a case 100, an electrode assembly 200, and an electrode lead 300.

First, the case 100 may be constituted by a lower case and an upper case, and a pocket-shaped receiving space configured to receive the electrode assembly 200 is formed in the case.

A receiving portion is formed in the case 100 using a laminate sheet including an outer resin layer 110, a metal layer 120, and an inner resin layer 130.

Specifically, the outer resin layer 110, which is located at the outermost side of the case 100, may be made of a heat-resistant polymer that exhibits excellent tensile strength, resistance to moisture permeation, and resistance to air transmission in order to secure heat resistance and chemical resistance while protecting the electrode assembly 200. As an example, the outer resin layer may be made of nylon or polyethylene terephthalate; however, the present invention is not limited thereto.

The metal layer 120, which is located between the outer resin layer 110 and the inner resin layer 130, corresponds to a barrier layer configured to prevent moisture or various kinds of gas from permeating into the battery. An aluminum thin film, which is lightweight and easily shapeable, may be used as a preferred material for the metal layer 120.

The inner resin layer 130, which is located at the innermost side of the case 100, is disposed in direct contact with the electrode assembly 200, and therefore the inner resin layer must exhibit high insulation properties and high electrolytic resistance. In addition, the inner resin layer must exhibit high sealability in order to hermetically isolate the case from the outside, i.e., a thermally-bonded sealed portion between inner layers must exhibit excellent thermal bonding strength.

The inner resin layer 130 may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

Although the receiving space is shown as being provided in each of the upper case and the lower case in FIG. 2, the receiving space may be provided in either the upper case or the lower case.

Next, the electrode assembly 200 will be described. The electrode assembly 200, which is seated in the receiving space of the case 100, may be a jelly-roll type electrode assembly, which is configured to have a structure in which a long sheet type negative electrode 210 and a long sheet type positive electrode 220 are wound in the state in which a separator 230 is interposed therebetween, a stacked type electrode assembly including unit cells, each of which is configured to have a structure in which a rectangular negative electrode 210 and a rectangular positive electrode 220 are stacked in the state in which a separator 230 is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode 210 is manufactured by applying a slurry mixture of a negative electrode active material and a binder to a negative electrode current collector.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode 220 is manufactured by applying a slurry mixture of a positive electrode active material and a binder to a positive electrode current collector.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a coated portion to which the slurry including the active material is applied and an uncoated portion to which no slurry is applied. The uncoated portion is cut or a separate conductive member is connected to the uncoated portion by ultrasonic welding to form a pair of electrode tabs, i.e., a negative electrode tab 211 and a positive electrode tab 221.

A thin insulating film having high ionic permeability and mechanical strength is used as the separator 230, which is interposed between the negative electrode 210 and the positive electrode 220 or which is provided outside the negative electrode 210. The pore diameter of the separator 230 is generally 0.01 µm to 10 µm, and the thickness of the separator is generally 5 µm to 300 µm. A sheet or nonwoven fabric made of, for example, an olefin-based polymer, which is chemically resistant and hydrophobic, such as polypropylene, fiberglass, or polyethylene, may be used as the separator 230; however, the present invention is not limited thereto.

A negative electrode lead 310 and a positive electrode lead 320, which constitute a pair of electrode leads 300, are electrically connected to the negative electrode tab 211 and the positive electrode tab 221, respectively, and are exposed out of the case 100.

Meanwhile, a plurality of holes spaced apart from each other by a predetermined distance in a longitudinal direction is preferably formed in at least one of the negative electrode tab 211 and the positive electrode tab 221. Specifically, the negative electrode tab 211 may be provided with a plurality of 1a holes 211a spaced apart from each other by a predetermined distance in the longitudinal direction, i.e., along a Y-axis, and the positive electrode tab 221 may also be provided with a plurality of 2a holes 221a spaced apart from each other by a predetermined distance in the longitudinal direction, i.e., along the Y-axis.

When the plurality of holes spaced apart from each other by the predetermined distance in the longitudinal direction are formed in the electrode tab, as described above, even though a crack occurs in a lateral direction of the width of the electrode tab (X-axis direction) due to external stress, propagation of the crack is terminated by the holes, whereby it is possible to prevent the electrode tab from being completely broken.

Although a bidirectional battery cell configured such that the negative electrode tab 211 and the positive electrode tab 221 are located while facing each other is shown in FIGs. 2 to 4, a unidirectional battery cell configured such that the electrode tabs are located in the same direction may be used.

Overlap portions between the respective electrode tabs constituting the negative electrode tab 211 and the positive electrode tab 221 and the electrode leads, e.g., a negative electrode overlap portion C1 and a positive electrode overlap portion C2 are welded.

As an example, the electrode tab and the electrode lead may be electrically connected to each other by ultrasonic welding. Connection by ultrasonic welding may be performed according to the principle by which highfrequency vibration generated by an ultrasonic wave of about 20 kHz is applied and vibration energy is converted into thermal energy due to friction at the interface between the electrode tab and the electrode lead as the result of operation of a horn and an anvil, whereby welding is rapidly performed. Of course, welding is not limited to ultrasonic welding as long as it is possible to electrically connect the electrode tab and the electrode lead to each other.

Although not shown in the figures, the overlapping portion at which the electrode tab and the electrode lead overlap each other, specifically the overlapping portion at which the electrode tab and the electrode lead are welded to each other, i.e. each of the negative electrode overlap portion C1 and the positive electrode overlap portion C2, may be provided with a protective tape (not shown) configured to wrap the overlap portion.

Since the electrode tab and the electrode lead are connected to each other by welding, the surfaces of the electrode tab and the electrode lead may not be smooth, which leads to poor insulation.

In other words, if the surface of the overlap portion is not smooth, when the overlap portion and the pouch case come into contact with each other due to impact, the inner resin layer is peeled off and the metal layer is exposed, resulting in poor insulation. Therefore, it is preferable to wrap the overlap portion using a protective tape in order to prevent poor insulation.

Here, the protective tape may be made of an insulating material, for example, but not limited to, polypropylene, polyethylene, polyester, or polyimide. However, the material of the protective tape is not limited thereto as long as the material is capable of wrapping a weld and remaining insulated when in contact with the pouch case.

In addition, although not shown in the figures, a lead film (not shown) is preferably provided at the position at which the sealed portion of the pouch case and the electrode lead overlap each other. The reason for this is that the lead film is capable of maintaining sealing of the pouch case while preventing electricity generated from the electrode assembly from flowing to the pouch case via the electrode lead.

The lead film is preferably made of a non-conductive material that does not conduct electricity well, and an insulating tape that is easily attached to the electrode lead and is relatively thin is mainly used; however, the present invention is not limited thereto.

Specifically, the lead film may be made of any one or two or more materials selected from the group consisting of polyimide (PI), polypropylene (PP), polyethylene (PE), polyethylene terephthalate (PET), polyvinyl chloride (PVC), high density polyethylene (HDPE), and an epoxy resin, and is joined to the inner resin layer of the pouch case by thermal fusion using heat and pressure.

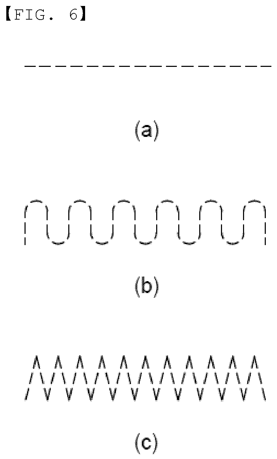

FIG. 5 is a view showing the shape of a hole formed in an electrode tab according to a first preferred embodiment of the present invention, and FIG. 6 is a view showing arrangement of holes formed in the electrode tab according to the first preferred embodiment of the present invention.

The shape of the hole may be at least one of a polygonal shape, including a quadrangular shape, an oval shape, and a circular shape although the shape of the hole is not particularly limited as long as the hole is formed in each of a negative electrode tab and a positive electrode tab in a longitudinal direction thereof.

In addition, an imaginary line that interconnects the holes disposed at the electrode tab preferably has, without being limited to, at least one of a straight shape, a mountain shape, a wavy shape, and a curved shape.

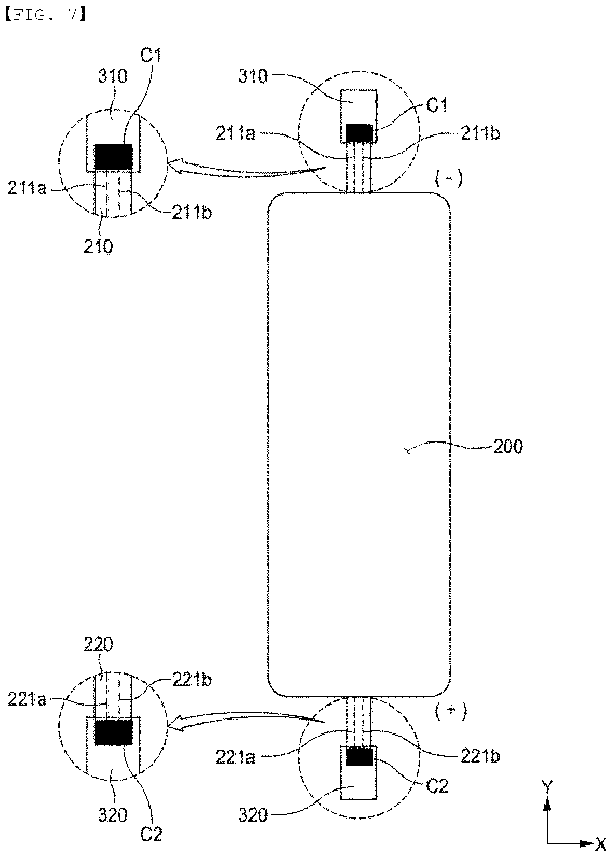

FIG. 7 is a plan view showing the state in which an electrode lead is connected to an electrode assembly according to a second preferred embodiment of the present invention. The second embodiment is identical in configuration to the first embodiment except for arrangement of holes formed in an electrode tab.

In the second embodiment of the present invention, a 1a hole 211a and a 1b hole 211b are formed in a negative electrode tab 211, and a 2a hole 221a and a 2b hole 221b are formed in a positive electrode tab 221.

More specifically, the negative electrode tab 211 is provided with a plurality of 1a holes 211a spaced apart from each other by a predetermined distance in a longitudinal direction (Y-axis direction) and a plurality of 1b holes 211b spaced apart from each other by a predetermined distance in the longitudinal direction (Y-axis direction), wherein the 1a holes 211a and the 1b holes 211b are formed so as to be spaced apart from each other by a predetermined distance in a lateral direction (X-axis direction).

Particularly, in the lateral direction (X-axis direction) of the negative electrode tab 211, the 1a holes 211a preferably partially overlap the 1b holes 211b and more preferably do not completely overlap the 1b holes.

When the holes are arranged at the negative electrode tab 211 such that the plurality of 1a holes 211a and the plurality of 1b holes 211b are spaced apart from each other by the predetermined distance in the lateral direction (X-axis direction) and some or all of the 1a holes 211a and the 1b holes 211b do not overlap each other, as described above, the holes are formed in most of the electrode tab in the longitudinal direction (Y-axis direction), whereby it is possible to more effectively prevent the electrode tab from being completely broken by a crack.

Meanwhile, the positive electrode tab 221 is provided with a plurality of 2a holes 221a spaced apart from each other by a predetermined distance in a longitudinal direction (Y-axis direction) and a plurality of 2b holes 221b spaced apart from each other by a predetermined distance in the longitudinal direction (Y-axis direction), wherein the 2a holes 221a and the 2b holes 221b are formed so as to be spaced apart from each other by a predetermined distance in a lateral direction (X-axis direction).

In the lateral direction (X-axis direction) of the positive electrode tab 221, the 2a holes 221a preferably partially overlap the 2b holes 221b and more preferably do not completely overlap the 2b holes 221b, in the same manner as in the negative electrode tab 211. The reason for this is the same as described for the negative electrode tab 211, and therefore a duplicate description thereof will be omitted.

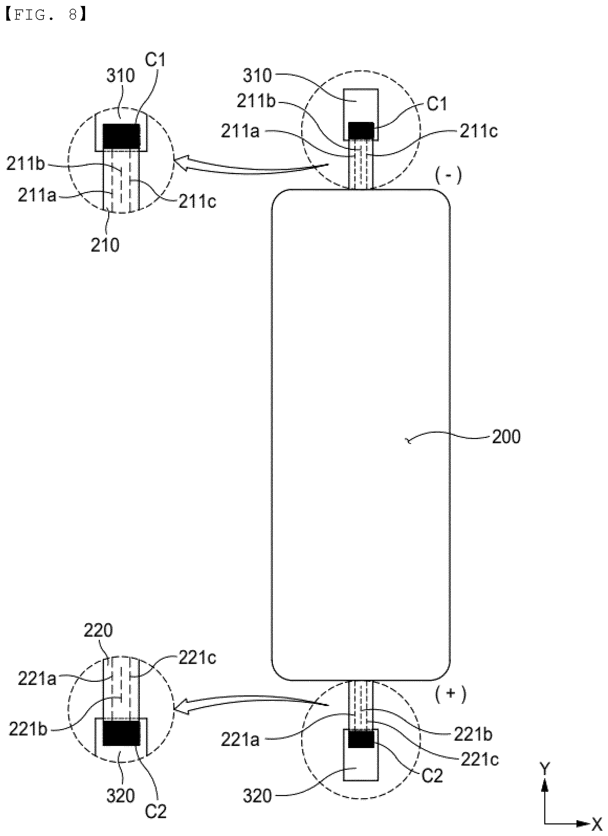

FIG. 8 is a plan view showing the state in which an electrode lead is connected to an electrode assembly according to a third preferred embodiment of the present invention. The third embodiment is identical in configuration to the first embodiment except for arrangement of holes formed in an electrode tab.

In the third embodiment of the present invention, a 1a hole 211a, a 1b hole 211b, and a 1c hole 211c are formed in a negative electrode tab 211, and a 2a hole 221a, a 2b hole 221b, and a 2c hole 212c are formed in a positive electrode tab 221.

More specifically, the negative electrode tab 211 is provided with a plurality of 1a holes 211a spaced apart from each other by a predetermined distance in a longitudinal direction (Y-axis direction), a plurality of 1b holes 211b spaced apart from each other by a predetermined distance in the longitudinal direction (Y-axis direction), and a plurality of 1c holes 211c spaced apart from each other by a predetermined distance in the longitudinal direction (Y-axis direction), wherein the 1a holes 211a, the 1b holes 211b, and the 1c holes 211c are formed so as to be spaced apart from each other by a predetermined distance in a lateral direction (X-axis direction).

Particularly, in the lateral direction (X-axis direction) of the negative electrode tab 211, the 1b holes 211b, which are located in the middle, preferably partially overlap the 1a holes 211a and the 1c holes 211c, which are located at opposite sides, and more preferably do not completely overlap the 1a holes and the 1c holes.

When the holes are formed in the negative electrode tab 211 so as to be arranged as described above, it is possible to prevent the electrode tab from being completely broken even though a crack occurs obliquely in the electrode tab in the longitudinal direction (Y-axis direction) as well as the lateral direction (X-axis direction).

Of course, the positive electrode tab 221 may also be provided with a plurality of 2a holes 221a spaced apart from each other by a predetermined distance in a longitudinal direction (Y-axis direction), a plurality of 2b holes 221b spaced apart from each other by a predetermined distance in the longitudinal direction (Y-axis direction), and a plurality of 2c holes 221c spaced apart from each other by a predetermined distance in the longitudinal direction (Y-axis direction), wherein the 2a holes 221a, the 2b holes 221b, and the 2c holes 221c are formed so as to be spaced apart from each other by a predetermined distance in a lateral direction (X-axis direction).

Also, in the lateral direction (X-axis direction) of the positive electrode tab 221, the 2b holes 221b, which are located in the middle, preferably partially overlap the 2a holes 221a and the 2c holes 221c, which are located at opposite sides, and more preferably do not completely overlap the 2a holes 221a and the 2c holes 221c, in the same manner as in the negative electrode tab 211. The reason for this is the same as described for the negative electrode tab 211, and therefore a duplicate description thereof will be omitted.

Although FIG. 8 shows that the 1a holes 211a to the 1c holes 211c are formed in the negative electrode tab 211 and the 2a holes 221a to the 2c holes 221c are formed in the positive electrode tab 221, additional holes may be formed in each electrode tab in the lateral direction (X-axis direction) .

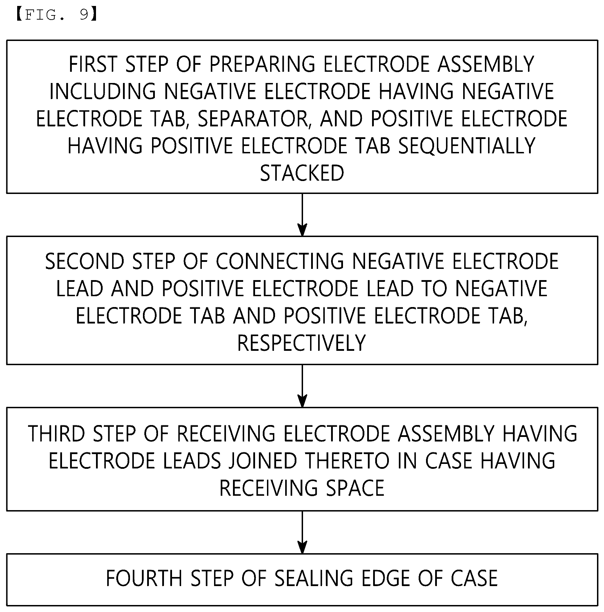

FIG. 9 is a flowchart illustrating a method of manufacturing a battery cell according to a second preferred embodiment of the present invention. The method of manufacturing the battery cell according to the second embodiment of the present invention includes a first step of preparing an electrode assembly configured such that a negative electrode having a negative electrode tab, a separator, and a positive electrode having a positive electrode tab are stacked in that order, a second step of connecting a negative electrode lead and a positive electrode lead to the negative electrode tab and the positive electrode tab, respectively, a third step of receiving the electrode assembly having the electrode leads joined thereto in a case having a receiving space, and a fourth step of sealing an edge of the case.

Before the second step, more specifically, in the first step of preparing the electrode assembly, it is preferable to punch or cut each of the negative electrode tab and the positive electrode tab, which are provided at uncoated portions, such that a plurality of holes spaced apart from each other by a predetermined distance in a longitudinal direction is formed in the electrode tab.

The shape and arrangement of the holes are the same as described above, and therefore a duplicate description thereof will be omitted.

The present invention may provide a battery module or a battery pack including the battery cell.

Those skilled in the art to which the present invention pertains will appreciate that various applications and modifications are possible within the category of the present invention based on the above description.

### (Description of Reference Symbols)

100: Pouch case
110: Inner resin layer
120: Metal layer
130: Outer resin layer
200: Electrode assembly
210: Negative electrode
211: Negative electrode tab
211a: 1a hole 211b: 1b hole
211c: 1c hole
220: Positive electrode
221: Positive electrode tab
221a: 2a hole 221b: 2b hole
221c: 2c hole
230: Separator
300: Electrode lead
310: Negative electrode lead
320: Positive electrode lead
C1: Negative electrode overlap portion
C2: Positive electrode overlap portion

## Claims

1. A battery cell comprising:
a case having a receiving space;
an electrode assembly received in the case, the electrode assembly comprising a negative electrode having a negative electrode tab, a positive electrode having a positive electrode tab, and a separator interposed between the negative electrode and the positive electrode; and
a pair of electrode leads having a negative electrode lead electrically connected to the negative electrode tab and a positive electrode lead electrically connected to the positive electrode tab,
wherein at least one of the negative electrode tab and the positive electrode tab is provided with a plurality of holes spaced apart from each other by a predetermined distance in a longitudinal direction.

2. The battery cell according to claim 1, wherein each of the holes of the plurality of holes is polygonal, oval, or circular in shape.

3. The battery cell according to claim 1, wherein an imaginary line that interconnects the plurality of holes has at least one of a straight shape, a mountain shape, a wavy shape, and a curved shape.

4. The battery cell according to claim 3, wherein
the plurality of holes is formed in the negative electrode tab,
the plurality of holes comprises a plurality of 1a holes spaced apart from each other by a predetermined distance in the longitudinal direction and a plurality of 1b holes spaced apart from each other by a predetermined distance in the longitudinal direction, and
the 1a holes and the 1b holes are formed so as to be spaced apart from each other by a predetermined distance in a lateral direction.

5. The battery cell according to claim 4, wherein, in the lateral direction of the negative electrode tab, the 1a holes partially overlap the 1b holes or do not completely overlap the 1b holes.

6. The battery cell according to claim 3, wherein
the plurality of holes is formed in the positive electrode tab,
the plurality of holes comprises a plurality of 2a holes spaced apart from each other by a predetermined distance in the longitudinal direction and a plurality of 2b holes spaced apart from each other by a predetermined distance in the longitudinal direction, and
the 2a holes and the 2b holes are formed so as to be spaced apart from each other by a predetermined distance in a lateral direction.

7. The battery cell according to claim 6, wherein, in the lateral direction of the positive electrode tab, the 2a holes partially overlap the 2b holes or do not completely overlap the 2b holes.

8. The battery cell according to claim 3, wherein
the plurality of holes is formed in the negative electrode tab,
the plurality of holes comprises a plurality of 1a holes spaced apart from each other by a predetermined distance in the longitudinal direction, a plurality of 1b holes spaced apart from each other by a predetermined distance in the longitudinal direction, and a plurality of 1c holes spaced apart from each other by a predetermined distance in the longitudinal direction, and
the 1a holes, the 1b holes, and the 1c holes are sequentially formed so as to be spaced apart from each other by a predetermined distance in a lateral direction.

9. The battery cell according to claim 8, wherein, in the lateral direction of the negative electrode tab, the 1b holes, which are located in a middle of the negative electrode tab, partially overlap the 1a holes and the 1c holes, which are located at opposite sides of the negative electrode tab, or do not completely overlap the 1a holes and the 1c holes.

10. The battery cell according to claim 3, wherein
the plurality of holes is formed in the positive electrode tab,
the plurality of holes comprises a plurality of 2a holes spaced apart from each other by a predetermined distance in the longitudinal direction, a plurality of 2b holes spaced apart from each other by a predetermined distance in the longitudinal direction, and a plurality of 2c holes spaced apart from each other by a predetermined distance in the longitudinal direction, and
the 2a holes, the 2b holes, and the 2c holes are sequentially formed so as to be spaced apart from each other by a predetermined distance in a lateral direction.

11. The battery cell according to claim 10, wherein, in the lateral direction of the positive electrode tab, the 2b holes, which are located in a middle of the positive electrode tab, partially overlap the 2a holes and the 2c holes, which are located at opposite sides of the positive electrode tab, or do not completely overlap the 2a holes and the 2c holes.

12. A battery module comprising the battery cell according to claim 1.

13. A battery cell manufacturing method comprising:
a first step of preparing an electrode assembly configured such that a negative electrode having a negative electrode tab, a separator, and a positive electrode having a positive electrode tab are stacked in that order;
a second step of connecting a negative electrode lead and a positive electrode lead to the negative electrode tab and the positive electrode tab, respectively;
a third step of receiving the electrode assembly having the electrode leads joined thereto in a case having a receiving space; and
a fourth step of sealing an edge of the case,
wherein the battery cell manufacturing method further comprises forming a plurality of holes spaced apart from each other by a predetermined distance in a longitudinal direction in at least one of the negative electrode tab or the positive electrode tab before the second step.

14. The battery cell manufacturing method according to claim 9, wherein
the plurality of holes is formed in the negative electrode tab,
the plurality of holes comprises a plurality of 1a holes spaced apart from each other by a predetermined distance in the longitudinal direction and a plurality of 1b holes spaced apart from each other by a predetermined distance in the longitudinal direction,
the 1a holes and the 1b holes are spaced apart from each other by a predetermined distance in a lateral direction, and
in the lateral direction of the negative electrode tab, the 1a holes partially overlap the 1b holes or do not completely overlap the 1b holes.

15. The battery cell manufacturing method according to claim 9, wherein
the plurality of holes is formed in the negative electrode tab,
the plurality of holes comprises a plurality of 1a holes spaced apart from each other by a predetermined distance in the longitudinal direction, a plurality of 1b holes spaced apart from each other by a predetermined distance in the longitudinal direction, and a plurality of 1c holes spaced apart from each other by a predetermined distance in the longitudinal direction,
the 1a holes, the 1b holes, and the 1c holes are sequentially formed so as to be spaced apart from each other by a predetermined distance in a lateral direction, and
in the lateral direction of the negative electrode tab, the 1b holes, which are located in a middle of the negative electrode tab, partially overlap the 1a holes and the 1c holes, which are located at opposite sides of the negative electrode tab, or do not completely overlap the 1a holes and the 1c holes.
